(19) Europäisches Patentamt
European Patent Office
Office européen des brevets

(11) **EP 2 806 679 A2**

(12) **EUROPEAN PATENT APPLICATION**

(43) Date of publication:
**26.11.2014 Bulletin 2014/48**

(51) Int Cl.:
*H04W 28/06* (2009.01)    *H04W 4/18* (2009.01)

(21) Application number: **14169548.6**

(22) Date of filing: **22.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.05.2013   GB 201309249**

(71) Applicant: **Vodafone IP Licensing Limited**
**The Connection**
**Newbury**
**Berkshire RG14 2FN (GB)**

(72) Inventors:
• **Cosimini, Peter**
  **London, W2 6BY (GB)**
• **Allen, Steve**
  **London, W2 6BY (GB)**
• **Fox, David Andrew**
  **London, W2 6BY (GB)**
• **Howard, Peter**
  **London, W2 6BY (GB)**

(74) Representative: **Boult Wade Tennant**
**Verulam Gardens**
**70 Gray's Inn Road**
**London WC1X 8BT (GB)**

(54)   **Telecommunications networks**

(57)   A mobile telecommunications network includes a core network (30) operable to provide core network functions; and a radio access network having control means (1), and radio means for wireless communication a terminal (10) registered with the telecommunications network via a cell. The control means (1) is operable to calculate a potential throughput value indicative of potential content delivery resource available for the terminal in the cell and to send the potential throughput value to an optimiser, the optimiser being operable to optimise delivery of content in dependence on the potential throughput value.

FIG. 1

EP 2 806 679 A2

**Description**

TECHNICAL FIELD

The present invention relates to a mobile telecommunications network including a core and a radio access network having radio means for wireless communication with mobile terminals registered with the network, and also to a corresponding method.

BACKGROUND TO THE INVENTION

The natural distribution of users within a site/cell (e.g. indoor/outdoor) means each user will experience different propagation conditions and as a result different data throughputs. Interference conditions will also vary across a cell resulting in more throughput variation amongst users. This applies to both unloaded and loaded conditions. In the case of loaded conditions with contention a base station scheduler may allocate proportionately more resources (e.g. time/frequency/power) to users in poorer radio conditions to improve throughput fairness and even out the disproportional throughput amongst users; however, this generally results in a lower average cell capacity and degrades the overall efficiency of the system, so is not applied.

When considering the typical scenario above in the context of video optimisation, current centrally based optimisation techniques apply a uniform level of optimisation (or no optimisation) for all users in a cell/site, or even the whole network, which is naturally inefficient. In some cases high level parameters (e.g. TCP Acks) are monitored to estimate the current link quality.

Conventional mobile telephone communications networks have architectures that are hierarchical and traditionally expensive to scale. Many of the network elements, such as the BTS, routers, BSC/RNC etc. are partly proprietary devices of one manufacturer often do not interface with devices from another manufacturer. This makes it difficult to introduce new capabilities into the network as a fully standardised interface will be required for devices from each manufacturer. Further, conventional base stations are not capable of intelligent local routing or processing. Furthermore, the capacity of existing networks is not always used effectively. For example, many cell sites are under used, whilst others are heavily used.

The current cellular network architecture has the following disadvantages:-

• Hierarchical and expensive to scale
• Backhaul is a major problem
• Proprietary platforms: BTS, BSC/RNC, SGSN etc.
• Closed nodes and interfaces
• Very limited application or customer awareness (except for QoS priority)
• No intelligent local routing or processing
• Inefficient use of installed capacity

There is therefore a need to overcome or ameliorate at least one of the problems of the prior art. In particular there is a need to address the needs of both the network operators and the users in improving the provision of mobile broadband data services.

Today mobile service delivery is provided through the mobile operator's packet core. Such a packet core may host a series of applications for enhancing the mobile service. To offer some of the applications closer to the user, the Applicant proposed to move potential applications on to "General Purpose Hardware Platform" hardware located at the edge of the radio access network.

EP2315412 describes the introduction of a novel control means or Platform (known as a Smart Access Vision (SAVi) platform) at the network edge. To open the radio access part, a "General Purpose Hardware Platform" may be implemented at the network edge. This may allow operators to split the functions of an Radio Network Controller (RNC) and/or a (e)NodeB between hardware and software. As a consequence operators have the capability to place applications directly at the edge of the network. The SAVi concept also introduces new functions in the network core.

SAVi may enable a mobile operator to deploy (in-line) services in radio access networks nodes such as base stations (e.g. eNodeB) and radio network controllers. Deploying such services in the radio access network can enhance the subscriber's mobile experience.

There are requirements that make service delivery through radio access network resources a challenge e.g. Lawful Intercept (LI), or charging. A Law Enforcement Agency (LEA) may demand a copy of all data transmitted to and received from a mobile subscriber for subscribers of interest. Only core network elements are deemed secure.

## SUMMARY OF THE INVENTION

According to a first aspect of the present invention, there is provided a mobile telecommunications network including:

a core network operable to provide core network functions; and
a radio access network having control means, and radio means for wireless communication a terminal registered with the telecommunications network via a cell;
characterised by a content optimiser, and in that the control means is operable to calculate a potential throughput value indicative of potential content delivery resource available for the terminal in the cell and to send the potential throughput value to the optimiser, the optimiser being operable to optimise delivery of content in dependence on the potential throughput value.

The potential throughput value of the radio link from a base station to the terminal may allow the content optimiser to relax the optimisation level for that terminal, for example.
In the embodiment the delivery of content is optimised for each individual terminal/user.
The content optimiser may be part of, or is associated with, the core network.
The potential throughput value may be dependent upon the radio link quality in the cell to the terminal.
The potential throughput value may be dependent upon a Channel Quality Indication (CQI) measurement reported by the terminal.
The potential throughput value may be dependent upon a maximum transport block size selected for the terminal.
The potential throughput value may dependent upon a plurality of parameters determined over a time period comprising a plurality of time intervals, the parameters including:

a current throughput value indicative of content delivery resource used for the terminal in the cell,
the number of the time intervals comprising the time period, and
the number of the time intervals in which a transmission is scheduled for the terminal.

The "content delivery resource used" may indicate the current throughput which is being successfully delivered over the radio link from the base station to the terminal. This may be limited by higher layer link control, application or optimisation processes (i.e. not radio related).
The content optimiser may be operable to optimise delivery of content further in dependence on the cell radio load. For example, the potential throughput value may be dependent upon a plurality of parameters determined over a time period comprising a plurality of time intervals, the parameters including:

a current throughput value indicative of content delivery resource used for the terminal in the cell,
the number of the time intervals comprising the time period that are unscheduled for content transmission for any terminal registered with the cell, and
the number of the time intervals in which a transmission is scheduled for the terminal.

The content optimiser may be operable to optimise delivery of content further in dependence on the cell backhaul load (e.g. the link between the RAN and the core network).
The control means may be operable to send the potential throughput value to the optimiser in a TCP option message. The TCP option message may include a signature for enabling verification of the provenance of the TCP option message.
According to a second aspect of the present invention, there is provided a mobile telecommunications network including:

a core network operable to provide core network functions; and
a radio access network having control means, and radio means for wireless communication a terminal registered with the telecommunications network via a cell;
characterised in that the control means is operable to send data to an element of the mobile telecommunications network by a TCP options message.

The element may be in the core network.
As mentioned above, when considering the known scenario in the context of video (or other content) optimisation, current centrally based optimisation techniques apply a uniform level of optimisation (or no optimisation) for all users in a cell/site or even the whole network which is naturally inefficient. In some cases high level parameters (e.g. TCP Acks) are monitored to estimate the current link quality but all current mechanisms suffer from not knowing the potential link quality of the link, which, according to the embodiment to be described, can be used to set the required optimisation level.

With knowledge of potential link quality each user's quality of experience (QoE) may be optimised and more overall video (or other content) can be delivered. Users in favourable radio conditions with high bandwidth/throughput can receive high quality video (or other content) while users in less favourable conditions with lower throughputs will be delivered lower rate videos (or other content) to prevent stalling. Device information (e.g. device type, screen size, viewing method etc.) can additionally be considered. According to the embodiment to be described, by optimising QoE, the overall quantity of delivered video (or other content) will increase resulting in increased service revenues for the operator.

The embodiment to be described proposes a method of using standardised Channel Quality Indication (CQI) measurements reported at regular intervals and resulting Maximum Transport Block Sizes to estimate the potential throughput available to a user. It also describes how other radio measurements and parameters (e.g. current throughput, cell load, number of active users) can be used in conjunction with this potential throughput parameter to set an optimal rate for delivering content.

The embodiment may provide the following benefits:

- Less video stalling for users in bad radio conditions with VO (Video Optimisation) enabled.
- Better quality for users in good radio conditions with VO enabled.
- More overall video content delivered.

The embodiment of the invention may provide:

- Definition of potential throughput parameter for content optimisation.
- Method and model of using potential throughput in conjunction with other radio measurements for content optimisation.

BRIEF DESCRIPTION OF THE DRAWINGS

For a better understanding of the present invention an embodiment will now be described by way of example, with reference to the accompanying drawings, in which:

Figure 1 shows SAVi Core Network Integration Architecture;

Figure 2 shown in a high level model of parameters for 'RAN Aware' Content Optimisation;

Figure 3A shows the transmission of data in transport blocks for a single user;

Figure 3B shows the transmission of data in transport blocks for multiple users;

Figure 4 shows the current and potential throughput values are calculated;

Figures 5A to 5C show various scenarios in which parameters are used for optimisation; and

Figure 6 shows a TCP Option Structure for use by the SAVi application.

DETAILED DESCRIPTION OF EMBODIMENT OF THE INVENTION

In an embodiment a control means is on Platform 1 (sometimes referred to as a SAVi platform) in the RAN (Radio Access Network) that provides services in a hosted SAVi processing environment.

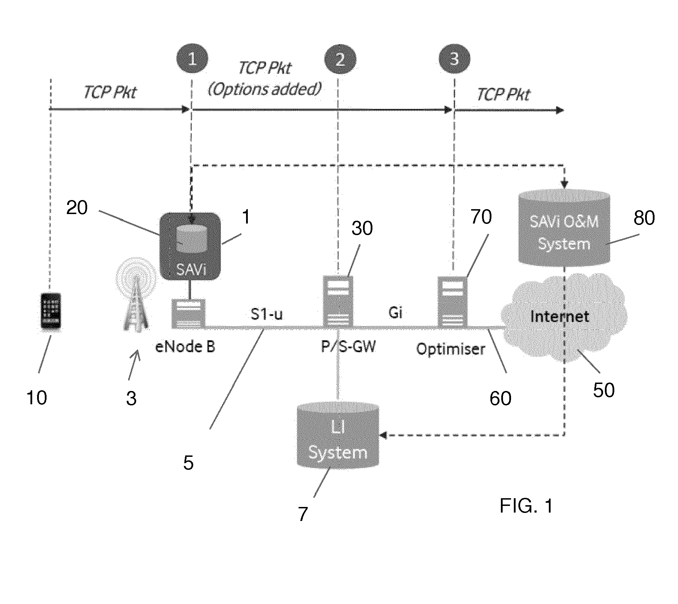

Figure 1 shows the system architecture of certain elements of the network. The Platform 1 is provided at the network edge and provides (e)NodeB/base station functions to the mobile terminal (user entity, UE) 10 by wireless communication. The (e)NodeB/base station is shown separately at 3 in Figure 1 but may be incorporated into the Platform 1.

The Platform 1 further includes an application 20 (or service or function) which will be described in more detail below. In practice, a plurality of applications are likely to be hosted on the Platform 1.

The Platform 1 is connected via an S1 interface 5 to the core network, which includes a gateway 30 (e.g. GGSN/P-GW/SAE-GW) The gateway 30 facilitates the provision of core network functions, such as LI by an LI system 7, and charging, by online charging system (not shown).

The gateway 30 receives content from a primary content source via the Internet 50. This content is received by an optimiser function 70 before delivery to the gateway 30.

The optimiser function 70 may apply various compression techniques or CODECs to the content to optimise the content for delivery to the mobile terminal 10. The optimiser 70 can provide a range of optimisation, from aggressive optimisation (high compression/lower quality) to relaxed optimisation (low or no compression/higher quality). Device 10 information (e.g. device type, screen size, viewing method etc.) can additionally be considered by the optimiser 70 - to tailor the optimisation to the device type. The device type may be identified by the IMEI, which may be communicated from the application 20 or obtained from the core network (e.g. the HLR, not shown).

The Platform 1 also communicates with a SAVi Operations and Management (O&M) system 80 in the network core.

The Platform 1 communicates with the radio frequency (RF) part of the base station, such as a (e)NodeB 3. The Platform 1 includes soft node components such as a soft eNodeB. The soft enodeB provides baseband functions equivalent to the baseband functions provided by a conventional enodeB in a 4G mobile telecommunications network. The Platform 1 may therefore communicate with the radio frequency part of a base station and provide appropriate baseband services. A mobile terminal that wishes to obtain telecommunication services from the mobile telecommunications network connects wirelessly to the radio frequency part of an eNodeB. Baseband functions may be provided either by a baseband part of the conventional eNodeB 3 or by the soft eNodeB forming an element of the soft node part of the Platform 1. For example, the soft eNodeB may receive radio measurements from the radio frequency part of the eNodeB 3 to which it is connected, and may provide these radio measurements to other elements of the Platform 1, including the application 20 in this embodiment.

A network functions part of the Platform 1 provides an Application Programming Interface (API) framework to a services part of the Platform 1. The services part of the Platform 1 supports a plurality of application, including application 20.

The API is implemented by a software program running on the network functions part which presents a standardised interface for the applications 20 etc. of the services part. The standardised API provides a consistent interface, defining communication protocols, ports etc. Full details of the API may be published to allow a multiplicity of applications to be developed for the platform 1 by multiple developers. This should be contrasted with prior art arrangements where each component of a mobile telecommunications network (such as BTS, BSC/RNC, SGSN etc) is proprietary and tends to have a unique interface, meaning that a different application must be written for each node of a conventional network.

According to the embodiment, the SAVi functionality is used to improve content optimisation by providing awareness of RAN conditions/resources to the optimiser 70.

Parameters for 'RAN Aware' Content Optimisation

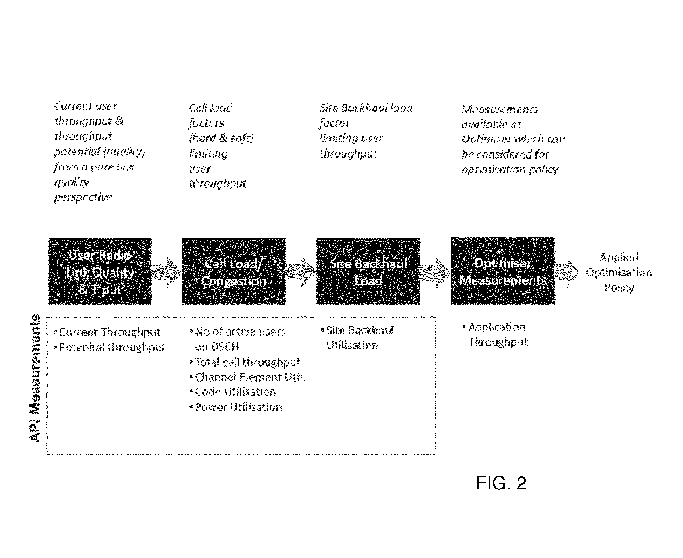

As shown in the high level model of Figure 2, the following parameters have been identified as those useful or relevant for RAN Aware content optimisation:

- **Current & Potential User Radio Link Throughput**
  These parameters indicate both the current throughput which is being successfully delivered over the radio link from the base station 3 to the terminal 10 and, as this may be limited by higher layer link control, application or optimisation processes (i.e. not radio related), the 'throughput potential' of the radio link from the base station 3 to the terminal 10 - allowing the Optimiser 70 to relax the optimisation level for that user, for example.
- **Cell Load**
  This indicates the overall cell or site load from all served/registered users and can allow the Optimiser 70 to determine if the cell/site 3 can support a relaxed level of optimisation (i.e. increased throughput) for a user, or conversely, if a more aggressive level of optimisation should be applied to a user to reduce the overall cell load and/or improve the QoE for other users in the cell/site 3. Note, cell load can be limited by hard (e.g. channel elements, tx power) or soft (e.g. codes) factors, both of which should be considered. The cell load may be dependent upon any of:

  - No. of active users on Downlink Shared Channel, DSCH
  - Total cell throughput
  - Channel Element Utilisation
  - Code Utilisation
  - Power Utilisation

- **Site Backhaul Load**
  This indicates the load on the link 5 from the core network to the cell site and, as with Cell Load, can be used to determine if the transmission/backhaul link can support a relaxed level of optimisation (i.e. increased throughput) for a user or a more aggressive policy should be applied.

- **Application Throughput at Optimiser**
  This is the application level throughput measured at, e.g., the optimiser 70 and can be used to determine or control the application level throughput at point of entry into the radio access network. The application throughput may be measured from packet rate at higher network layer (e.g. at the Optimiser 70).

The first three parameters may be measured by the soft eNodeB of the Platform 1 and communicated via the API to the SAVi application 20.

Process for Selecting Maximum Transport Block Size for Transmission

A process for selecting maximum transport block size for transmission will now be described.

CQI, Channel Quality Indicator, is used by the mobile device 10 to indicate the channel quality to the eNodeB 3. The CQI reported value is between 0 and 15. The reported CQI may be adjusted based on factors such as Bit Error Rate (BER) targets, power limitations, cell utilisation/load. The maximum Transport Block size is selected from the adjusted CQI based on the procedure described in TS 25.214, which is hereby fully incorporated by reference. Data are then transmitted using the selected maximum Transport Block size. In this example, the Transport Blocks are transmitted in a Transmission Time Interval (TTI) of 2ms.

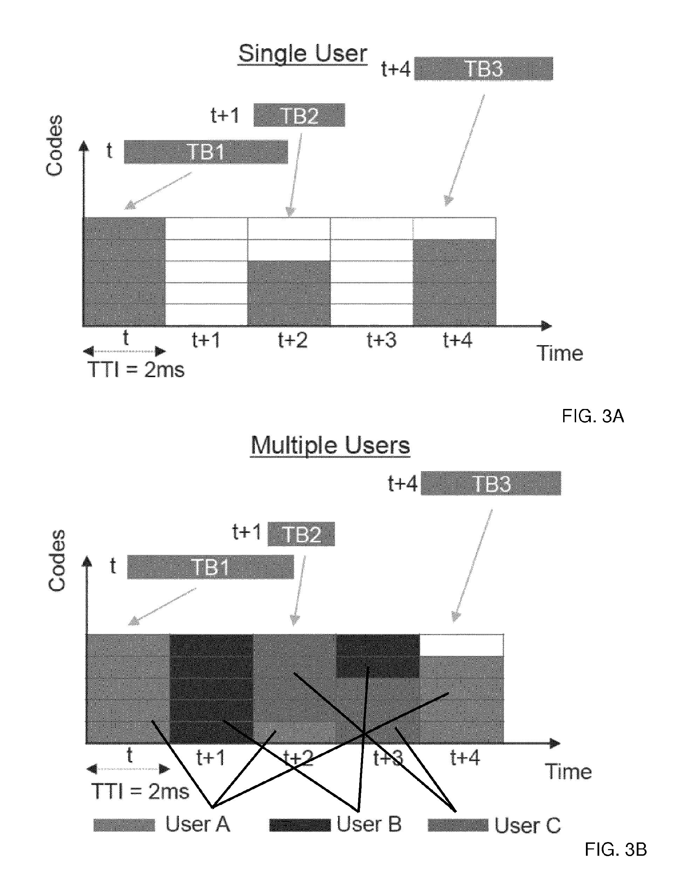

Figure 3A shows the transmission of data in transport blocks for a single user. Figure 3B shows the transmission of data in transport blocks for multiple users. As can be seen, the transport block size may different for each user during each TTI, in accordance with the selection process described in the preceding paragraph.

Calculation of Current and Potential Throughput Values

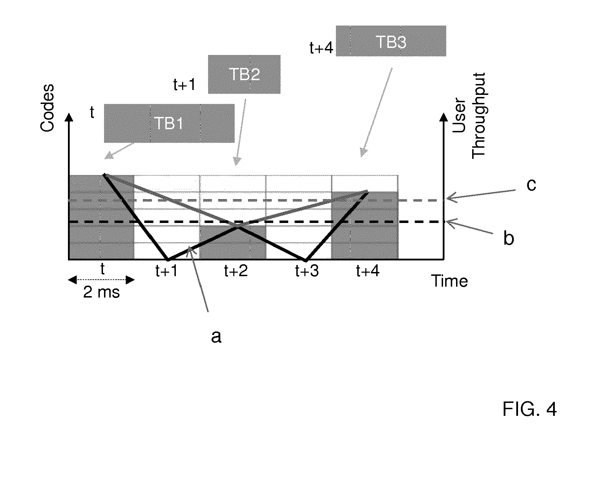

How current and potential throughput values are calculated will now be described with reference to Figure 4.

For each TTI the Instantaneous Throughput (t) is calculated as follows:

$$t = \text{TX Transport Block Size} / \text{TTI period}$$

(TTI period being 2ms in this example).

Line "a" in Figure 4 shows the instantaneous throughput. The instantaneous throughput (t) values are listed in the table below:

| TTI | t | t+1 | t+2 | t+3 | t+4 |
|-----|---|-----|-----|-----|-----|
| t | 5 | 0 | 2 | 0 | 4 |

Current Throughput is equal to the average instantaneous throughput measured over all TTIs in averaging period including those TTIs with no scheduled transmission (t+1 and t+4 in the example). The averaging period is optimally set depending on whether the rate of optimisation which can be applied to the content and the rate of change of the TTI usage and radio conditions.

In the example above, the Current Throughput is calculated as follows:

$$\text{Current Throughput} = (5 + 0 + 2 + 0 + 4) / 5 = 2.2.$$

The Current Throughput value is indicated at b in Figure 4.

Potential Throughput (without considering TTI usage from other links or users, i.e. without load) is equal to the average instantaneous throughput measured only over TTIs in the averaging period where a transmission is scheduled (TTIs t, t+2 and t+4 in this example). In the example, the Potential Throughput is calculated as follows:

$$\text{Potential Throughput (without load)} = (5 + 2 + 4) / 3 = 3.67.$$

Expressed differently, Potential Throughput (without load) can be calculated from Current Throughput as follows:

Potential Throughput (without Load) =

Current Throughput x

(Total No. of TTIs in averaging period/

Total No. of TTIs where a transmission is scheduled for the

link).

So, in the example:

Potential Throughput (without Load) =

2.2 x (5 / 3) = 3.67.

The Potential Throughput value is indicated at c in Figure 4.

Potential Throughput considering TTI usage from other links or users in the cell (i.e. with load) can be calculated from Current Throughput as follows:

Potential Throughput (with Load) =

Current Throughput x

(1 + Total no. of unscheduled TTIs in averaging period/

Total no. of TTIs where a transmission is scheduled for the link)

So, in the example:

Potential Throughput (with Load) =

2.2 x (1 + 2 / 3) = 3.67.

The Potential Throughput is the same with and without load as there is only one user scheduled in the example, so there are no other users or links to affect the value.

The current throughput value corresponds to the content delivery resource used for the terminal in the cell. The current throughput value may be limited by higher layer link control, application or optimisation processes (in this embodiment the optimisation level set by the optimiser 70). The current throughput value is not directly related to the available radio resources for the terminal in the cell. The Potential Throughput value of the radio link from the base station 3 to the terminal 10 is directly related to the available radio resources for the terminal in the cell. By calculating the Potential Throughput value, and sending this to the Optimiser 70, this enables the Optimiser 70 to adjust the optimisation level to an optimum level for a particular user in a particular cell in dependence on the radio resources - e.g. to relax the optimisation level for that user. Thus, content optimisation can be tailored for each user/terminal according to the radio link quality/conditions.

Examples of Optimisation

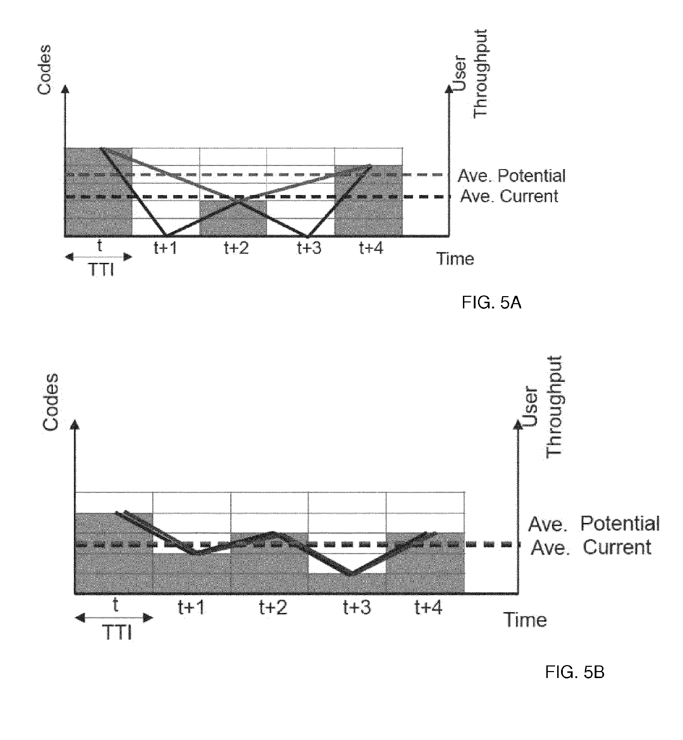

Figures 5A to 5C show various scenarios in which the above-mentioned parameters are used for optimisation.

Figure 5A shows a first scenario where throughput is limited by the optimiser function 70. Current average user throughput (current throughput) over radio link meets the required optimiser function 70 throughput. The average 'Potential' throughput is greater than average Current throughput. The Cell Load is low. In view of these parameter values, a higher optimiser function 70 throughput may be supported.

Figure 5B shows a second scenario where throughput is limited by the radio. Current average user throughput (current throughput) over radio link meets or is lower than required optimiser function 70 throughput. The Average 'Potential' throughput is equal to Average Current throughput. Cell Load is low. In view of these parameter values, lower optimiser function 70 throughput may be required to preserve service QoE.

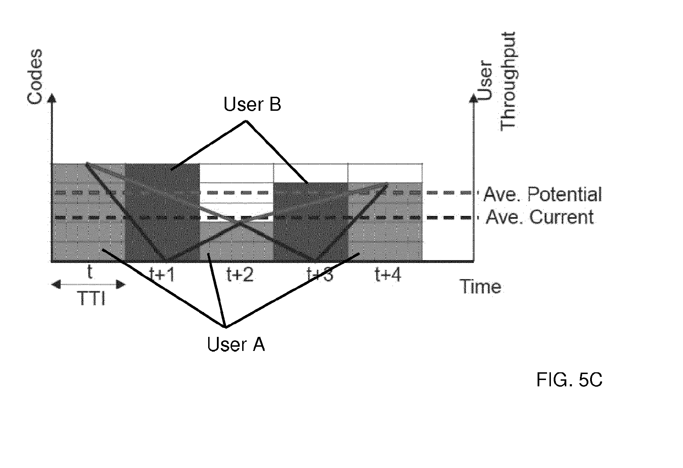

Figure 5C shows a third scenario where throughput is limited by cell load. Current average user throughput (current throughput) over radio link meets or is lower than the required optimiser function 70 throughput. The Average 'Potential' throughput is greater than average Current throughput. However, Cell Load indication is high/medium (due to user B also being scheduled). In view of these parameter values, lower optimiser function 70 throughput may be required to preserve service QoE or reduce overall cell load.

In Figure 5C the using the equation for Potential Throughput (with Load) above, where:

$$\text{Potential Throughput (with Load)} =$$

$$\text{Current Throughput x}$$

$$(1 + \text{Total no. of unscheduled TTIs in averaging period}/$$

$$\text{Total no. of TTIs where a transmission is scheduled for the link}),$$

$$\text{the Potential Throughput (with Load)} =$$

$$2.2 \times (1 + 0 / 3) = 2.2.$$

This calculation shows that the Potential Throughput is the same as the Current Throughput, indicating a highly loaded cell.

The following table provides API Measurement Definitions

| Parameter | Measurements | Description | Range | Bits |
|---|---|---|---|---|
| User Radio Link Throughput & Throughput Potential | Current User Throughput | Average user throughput measured over the API update (averaging) period at the application 20 | 0-100 Mb/s in 100 kb/s steps | 10 |
| | Potential User Throughput (with Load) | Current user throughput scaled by ratio of 1 +total No. of unscheduled (free) TTIs and No. of scheduled TTIs for the link over the API update period | 0-100Mb/s in 100 kb/s steps | 10 |
| | Potential User Throughput (without Load) | Current user throughput scaled by ratio of total No. of TTIs and No. of scheduled TTIs for the link over the API update period** | 0-100Mb/s in 100 kb/s steps | 10 |
| Cell Load | No. of Active Users on DSCH | Average number of active users on downlink shared channel measured over the API update period | 0..30 | 5 |
| | Total Cell Throughput | Average total cell throughput measured over the API update period, expressed as a % of configured peak cell throughput | 0..100% in steps of 5% | 5 |
| | Cell Utilisation Factor | Maximum of Channel Element, TX Power & Code Utilisation where utilisation is averaged over API update period. Cell utilisation Factor = Max [CE Utilisation, Power Utilisation, Code Utilisation]. The weights applied should be configurable. | 0..100% in steps of 5% | 5 |
| Site Backhaul Load | Backhaul Utilisation Factor | Average total throughput on backhaul link, measured over the API update period, expressed as a % of configured peak link throughput | 0..100% in steps of 5% | 5 |

The Platform 1 application 20 is able to provide to the optimiser function 70 information (including any of the above measurements) in relation to all 7 layers of the OSI model, i.e. the physical layer, data link layer, network layer, transport layer, session layer, presentation layer and application layer. The optimiser function 70 is therefore able to accurately determine the real radio conditions.

In contrast, conventionally, real radio information is not available to the core network and so cannot be provided to the optimiser function 70. In such a conventional arrangement the radio capacity may be estimated at the application layer of the OSI model using the Transmission Control Protocol (TCP). According to the TCP, the receiving device is required to respond with an acknowledgement message when it receives a data packet. The sending device records each packet that it sends, and waits for acknowledgement of receipt before sending the next packet. The sending device times from when each packet was sent, and retransmits a maximum packet if the time expires. The TCP uses a sliding window flow control arrangement for the purpose of sending data at a speed at which it can be safely transmitted and processed by the receiver. In each TCP segment, the receiver specifies in a "receive window" field the amount of additional received data that it is able to buffer for the connection. The sender sends only up to this amount of data before it waits for acknowledgement and window update from the receiver.

TCP is optimised for wired networks. Accordingly, any packet loss is considered to be the result of network congestion, and consequently the window size is reduced dramatically as a precaution by the receiver automatically when packet loss occurs. However, wireless links, such as those of solar telecommunications networks, experience sporadic and often temporary losses of data due to inter-cell handovers and other radio effects. These temporary losses are not due to congestion (which tends to be long term) but rather due to short term effects, such as radio effects. However, because TCP was designed for wired networks, it assumes that the data loss is due to congestion and significantly decreases the window size for the purpose of congestion avoidance. The window size is only increased again gradually. Whilst this is suitable for wired networks where, as mentioned above, congestion is relatively long term, it results in significant under utilisation of radio link capacity because any data loss is usually short term, the capacity if therefore wasted once the radio effects that resulted in data loss disappear whilst the TCP slowly increases the window size.

The present embodiment, by using actual radio measurements from the Platform 1 avoids the disadvantages of conventional TCP-based estimation with wireless networks.

Use of TCP Option message to communicate radio measurements

In the embodiment, the radio measurements are communicated in a TCP Option message from the application 20 to the optimiser function 70.

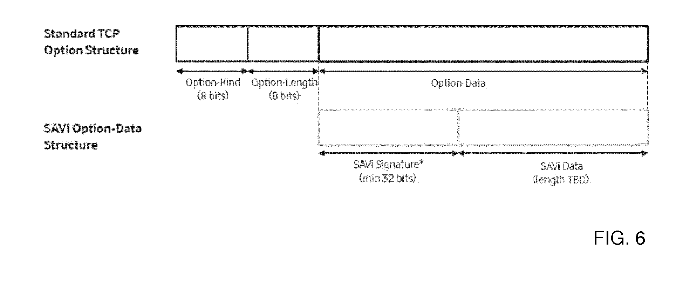

Figure 6 shows a TCP Option Structure for use by the SAVi application 20. The TCP message includes the following elements:

Option-Kind (8 bits)

Option-Kind value for SAVi. Two options:

1. Select appropriate Reserved but un-assigned values from IANA list avoiding known values which are being used without authorisation (79-252)
2. Use Experiment Kind values (253 & 254).

Option-Length (8 bits)

Selected based on agreed radio information format or other information usage.

Option-Data

SAVi Signature (min 32 bits): Used to verify the specified Options-Kind value was added by the SAVi application 20. Signature is generated from an agreed hash generator and Signature string. Different signature strings can be used support concurrent use of the Option-Kind value by the SAVi App(s) e.g.:

Signature 1: "VF SAVi RAN aware content optimisation"
Signature 2: "VF SAVi RAN aware network management"
SAVi Data: Data added by SAVi application 20 in agreed format e.g.
Radio network information with Cell ID, Cell Load, Signal Quality etc.

A similar method to SAVi Signature for the shared use of Experimental TCP Options is detailed in http://tools.ietf.org/html/draft-ietf-tcpm-experimental-options-03, 'Shared use of experimental TCP options', TCPM Working Group, Internet Draft, November 28th, J Touch, which is fully incorporated herein by reference.

The high level procedure for sending data from the radio network API to central optimiser 70 will now be described with reference to Figure 1.

At step (1) a TCP packet "TCP Pkt" sent by UE 10 is intercepted by SAVi application 20. The application 20 adds radio network information as TCP Option data with pre-defined Option-Kind, Option-Length & SAVi Signature. In more detail, the SAVi application 20 performs the following steps:

A. Application 20 inspects TCP Options field of TCP Packet.

B. If specified Option-Kind value for SAVi is not used then go to Step C, else check if corresponding pre-defined Option-Length and Signature is also used and record Option-Kind and Options-Length and Signature collision usage and forward packet without processing.

C. If space exists for specified Radio network information then go to Step D, else forward packet without processing.

D. Insert radio network information as Option data with specified Option-Kind, Option-Length & Signature for SAVi and forward packet as normal.

The message "TCP Pkt (Options added)" is then sent to the core network.

At step (2) the LI system 7 reads and records all data including TCP Option data added by the SAVi application 20. LI system 7 can be made aware of pre-defined Option-Kind, Option-Length & SAVi Signature through SAVi O&M system 80. There is no special procedure required by the LI system 7 as the LI system 7 needs to specifically see exactly what was sent by the user 10 and be aware of and see any data inserted by the application 20. The LI system 7 may therefore request system configuration records from the SAVi O&M system 80 detailing what Option-Kind, Option-Length and SAVi Signatures used by the SAVi application 20 (see Design Requirements & Considerations below).

At step (3) the Optimiser 70 detects TCP Options added by SAVi Server application 20 based on pre-defined Option-Kind, Option-Length & SAVi Signature, and removes this data ahead of forwarding/routing as normal. In more detail, the Optimiser 70 preforms the following steps:

A. Optimiser 70 inspects all relevant TCP packets for specified TCP Option-Kind value for SAVi, if detected go to Step B, else forward packet as normal.

B. If Option-Length and Signature for the Option exactly matches the specified Option-Length and Signature for SAVi then:

a. Read and remove the Option.

b. Modify the relevant TCP Header information appropriately (e.g. Data Offset field).

c. Forward the modified packet as normal and apply appropriate optimisation (compression) for the user terminal 10 based on the SAVi radio data in the TCP message.

Else if specified Option-Length and Signature don't match then forward as normal without processing.

Design Requirements & Considerations

Preferably the following design assumptions and considerations should be taken into account:

1. The SAVi application 20 should not replace or modify any Options data in TCP packets it processes (especially if the specified Option-Kind value is already used).

2. The SAVi signature should be selected such that the probability of collisions by an end user application is extremely rare (32 bits is currently considered sufficient as a minimum).

3. The SAVi Signature should be configured by the SAVi O&M system 80, and the SAVi O&M system 80 should maintain a record of Signature configurations (for LI purposes).

4. The SAVi application 20 and associated SAVi O&M system 80 is required to detect and record any intentional/malicious or unintentional collisions (both for LI and system configuration reasons). An appropriate binding ID (e.g. UE IP address) and timestamp for this information needs to be discussed.

5. The SAVi O&M system 80 should raise an alarm if repetitive use is detected on any SAVi server application 20.

6. The SAVi application 20 and associated SAVi O&M system 80 may be required to disable any related Optimiser functionality at least for the impacted radio environment (see Point 7),

7. The Optimiser 70 should be able to detect and mitigate any inconsistencies in reported information, resulting from intentional/malicious or unintentional Option collisions, without impacting service performance below a level experienced without using TCP Option data for optimisation.

8. The Optimiser 70 should be able to disable any optimisation based on TCP Option data for any link and/or cell as required.

9. The Optimiser 70 should remove all TCP Option data added by the SAVi application 20.

10. The LI system 7 will capture uplink TCP options inserted by the SAVi application 20, and subsequently dropped by the Optimiser 70 (or other consumer of RAN information) before forwarding to the end user/Application. This should be acceptable to LEA.

11. Option-Kind values are assigned and reserved by IANA. Two options are considered for using appropriate Option-Kind values for SAVi Applications in a 'private network':

a. Select appropriate Reserved but un-assigned values from the **published IANA** list avoiding known values which are being used without authorisation (79-252). These values should not currently be used by end user applications but this cannot be guaranteed as 'squatting' is common for certain reserved but un-assigned values [see 'Shared use of experimental TCP options', TCPM Working Group, Internet Draft, November 28th, J Touch, cited above]. Future use is also somewhat unpredictable but in the case of any future assignment by IANA an alternative value may be used. A proper audit should be undertaken to ensure any values used are not extensively used by current Applications

b. **Use Experiment Kind values (253 & 254).** These Kind values are defined for use by experiments in typically controlled environment but can also be in public environments, or more generally when an assignment of a specific Kind value is not considered appropriate. RFC states:

It is only appropriate to use these values in explicitly-configured experiments; they should not be shipped as defaults in implementations. See RFC3692, which is fully incorporated by reference for details.

It is reported that these experimental options are already used in operational code for TCP authentication [see 'Shared use of experimental TCP options', TCPM Working Group, Internet Draft, November 28th, J Touch, cited above]. While use of the Experimental options in a 'private network' as for SAVi may be more legitimate or appropriate as its use might be more uncertain or unpredictable than using Reserved but unassigned values Option a. is currently preferred.

Although in the embodiment described the TCP Options message as used to communicate radio data to the optimiser, the invention is not so limited. The TCP Options may be used for sending any data from a SAVi platform 1 to another network element (e.g. the core network or a part thereof).

It should also be appreciated that, although the embodiment relates to delivery of video content to a terminal, the present invention is applicable to the delivery of any form of content - such as (still) images or audio files.

It should further be appreciated that, although the embodiment refers to an LTE eNodeB, the invention is applicable to other types of wireless/mobile/cellular networks, such as 2G, 3G (UMTS), 5G and WiFi networks.

**Claims**

1. A mobile telecommunications network including:

a core network operable to provide core network functions; and
a radio access network having control means (1), and radio means (3) for wireless communication a terminal (10) registered with the telecommunications network via a cell;
**characterised by** a content optimiser (70), and in that the control means (1) is operable to calculate a potential throughput value indicative of potential content delivery resource available for the terminal (10) in the cell and to send the potential throughput value to the optimiser (70), the optimiser (70) being operable to optimise delivery of content in dependence on the potential throughput value.

2. The mobile telecommunications network of claim 1, wherein the content optimiser (70) is part of, or is associated with, the core network.

3. The mobile telecommunications network of claim 1 or 2, wherein the potential throughput value is dependent upon the radio link quality in the cell to the terminal (10).

4. The mobile telecommunications network of claim 1, 2 or 3, wherein the potential throughput value is dependent upon a Channel Quality Indication (CQI) measurement reported by the terminal (10).

5. The mobile telecommunications network of any one of claims 1 to 4, wherein the potential throughput value is dependent upon a maximum transport block size selected for the terminal (10).

6. The mobile telecommunications network of any one of claims 1 to 5, wherein the potential throughput value is dependent upon a plurality of parameters determined over a time period comprising a plurality of time intervals, the parameters including:

a current throughput value indicative of content delivery resource used for the terminal in the cell, the number of the time intervals comprising the time period, and the number of the time intervals in which a transmission is scheduled for the terminal (10).

7. The mobile telecommunications network of any one of claims 1 to 6, wherein the content optimiser (70) is operable to optimise delivery of content further in dependence on the cell radio load.

8. The mobile telecommunications network of claim 7, wherein the potential throughput value is dependent upon a plurality of parameters determined over a time period comprising a plurality of time intervals, the parameters including:

a current throughput value indicative of content delivery resource used for the terminal in the cell, the number of the time intervals comprising the time period that are unscheduled for content transmission for any terminal registered with the cell, and the number of the time intervals in which a transmission is scheduled for the terminal (10).

9. The mobile telecommunications network of any one of claims 1 to 8, wherein the content optimiser (70) is operable to optimise delivery of content further in dependence on the cell backhaul load.

10. The mobile telecommunications network of any one of claims 1 to 9, wherein the control means (1) is operable to send the potential throughput value to the optimiser in a TCP option message.

11. The mobile telecommunications network of claim 10, wherein the TCP options message includes a signature for enabling verification of the provenance of the TCP option message.

12. A mobile telecommunications network including:

a core network operable to provide core network functions; and a radio access network having control means (1), and radio means for wireless communication a terminal (10) registered with the telecommunications network via a cell; **characterised in that** the control means (1) is operable to send data to an element of the mobile telecommunications network by a TCP option message.

13. The mobile telecommunications network of claim 12, wherein the TCP options message includes a signature for enabling verification of the provenance of the TCP option message.

14. A method of operating a mobile telecommunications network that includes a core network operable to provide core network functions; and a radio access network having control means (1), and radio means (3) for wireless communication a terminal (10) registered with the telecommunications network via a cell; **characterised in that** the control means (1) calculates a potential throughput value indicative of potential content delivery resource available for the terminal (10) in the cell and sends the potential throughput value to a content optimiser (70), the content optimiser (70) optimising delivery of content in dependence on the potential throughput value.

15. A method of operating a mobile telecommunications network that includes a core network operable to provide core network functions; and a radio access network having control means (1), and radio means (3) for wireless communication a terminal (10) registered with the telecommunications network via a cell; **characterised in that** the control means (1) sends data to an element of the mobile telecommunications network by a TCP option message.

FIG. 1

*Current user*
*throughput &*
*throughput*
*potential (quality)*
*from a pure link*
*quality*
*perspective*

*Cell load*
*factors*
*(hard & soft)*
*limiting*
*user*
*throughput*

*Site Backhaul load*
*factor*
*limiting user*
*throughput*

*Measurements*
*available at*
*Optimiser which can*
*be considered for*
*optimisation policy*

| User Radio Link Quality & T'put | → | Cell Load/ Congestion | → | Site Backhaul Load | → | Optimiser Measurements | → | Applied Optimisation Policy |

**API Measurements**

- Current Throughput
- Potenital throughput

- No of active users on DSCH
- Total cell throughput
- Channel Element Util.
- Code Utilisation
- Power Utilisation

- Site Backhaul Utilisation

- Application Throughput

FIG. 2

## Single User

FIG. 3A

## Multiple Users

User A   User B   User C

FIG. 3B

FIG. 4

FIG. 5A

FIG. 5B

EP 2 806 679 A2

FIG. 5C

18

Standard TCP
Option Structure

| Option-Kind (8 bits) | Option-Length (8 bits) | Option-Data |

SAVi Option-Data
Structure

SAVi Signature* (min 32 bits) | SAVi Data (length TBD)

FIG. 6

**EP 2 806 679 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2315412 A

### Non-patent literature cited in the description

- **J TOUCH.** Shared use of experimental TCP options. *TCPM Working Group, http://tools.ietf.org/html/draft-ietf-tcpm-experimental-options-03*